# EUROPÄISCHE PATENTSCHRIFT

(11) **EP 1 562 804 B1**
(45) Veröffentlichungstag und Bekanntmachung des Hinweises auf die Patenterteilung: **04.01.2012**
(21) Anmeldenummer: 03773565.1
(22) Anmeldetag: 23.10.2003
(51) Int. Cl.: B60S 1/40, B60S 1/38

(54) **WISCHBLATT**
WIPER BLADE
RACLETTE D'ESSUIE-GLACE

(30) Priorität: 15.11.2002 DE 10253580; 15.11.2002 DE 20220355 U
(43) Veröffentlichungstag der Anmeldung: 17.08.2005
(60) Teilanmeldung: 09100025.7
(73) Patentinhaber: ROBERT BOSCH GMBH, 70442 Stuttgart (DE)
(72) Erfinder: BAUER, Peter-Josef, B-3300 Tienen (BE); DIETRICH, Jan, 77815 Buehl (DE); DE BLOCK, Peter, B-3545 Halen (BE)
(86) Internationale Anmeldenummer: PCT/DE2003/003520
(87) Internationale Veröffentlichungsnummer: WO 2004/045927

(56) Entgegenhaltungen:
- EP-A- 0 228 313
- EP-A- 0 713 810
- EP-A- 1 093 984
- WO-A1-01/51324
- DE-A- 10 025 710
- DE-A- 10 058 208
- DE-A- 19 909 971
- US-A- 3 317 945

## Beschreibung

### Stand der Technik

Die Erfindung geht insbesondere aus von einem Wischblatt nach dem Oberbegriff des Anspruchs 1.

Aus der DE 198 35 065 A1 ist ein gattungsbildendes Wischblatt für ein Kraftfahrzeug bekannt. Das Wischblatt umfasst eine Wischleiste und einen in einem Längskanal, der als Hohlprofil ausgebildeten Wischleiste angeordneten, bogenförmigen, federelastischen Wischleistenträger, wobei sich entlang einer konkaven Seite des Wischleistenträgers eine Wischlippe der Wischleiste erstreckt.

Ferner umfasst das Wischblatt eine von der Wischleiste getrennt ausgebildete Adaptereinheit zur Anlenkung an einen Wischarm. Die Adaptereinheit weist auf der der Wischlippe abgewandten, infolge des Wischleistenträgers konvex ausgebildeten Seite der Wischleiste ein im Wesentlichen von einem U-Profil gebildetes Adapterelement aus Blech auf. Das Adapterelement ist mit einstückig angeformte, krallenartigen Klemmmitteln auf der Wischleiste und dem Wischleistenträger befestigt, die eine Kopfleiste der Wischleiste und den darin angeordneten Wischleistenträger untergreifen. Mittels einer Spannkraft der Klemmmittel wird das Adapterelement auf der Wischleiste und der Wischleistenträger in der Wischleiste in Längsrichtung des Wischblatts kraftschlüssig fixiert.

Aus der DE-A-19945858 ist ein Wischblatt mit den Merkmalen des Oberbegriffs des Anspruchs 1 bekannt.

Weiterhin ist aus der EP-A-0228313 ein herkömmliches Bügelwischblatt bekannt, bei dem im Zentralbereich der Wischleiste ein Wischleistenträger eingeklebt ist.

### Vorteile der Erfindung

Die Erfindung geht aus von einem Wischblatt, insbesondere für ein Kraftfahrzeug, mit einem federelastischen Wischleistenträger und einer vom Wischleistenträger getragenen Wischleiste, deren Wischlippe sich entlang einer konkaven Seite des Wischleistenträgers erstreckt, sowie mit einer von der Wischleiste getrennt ausgebildeten Adaptereinheit zur Anlenkung an einen Wischarm.

Es wird vorgeschlagen, dass der Wischleistenträger und die Wischleiste im Bereich der Adaptereinheit über wenigstens eine in Längsrichtung wirkende Stoffschlussverbindung verbunden sind. Bei einer vorteilhaft flexiblen Gestaltungsmöglichkeit der Adaptereinheit infolge der getrennten Ausbildung von der Wischleiste können bei einer insgesamt sicheren Verbindung zwischen der Wischleiste und dem Wischleistenträger ungewünschte, die Betriebsfunktion negativ beeinflussende Quetschungen der Wischleiste vermieden werden. Zudem kann ausgehend vom Wischarm zur Wischleiste ein vorteilhafter Kraftfluss erreicht und ausgehend von einem mittleren Bereich kann eine vorteilhafte freie Beweglichkeit zwischen der Wischleiste und dem Wischleistenträger erzielt werden. Ferner können zusätzliche Bauteile, wie insbesondere die Wischleiste und den Wischleistenträger zueinander fixierende Endkappen, Montageaufwand und Kosten eingespart werden. Die Wischleiste und der Wischleistenträger können dabei allein durch die Stoffschlussverbindung in Längsrichtung zueinander fixiert oder es kann zudem eine kraftschlüssige Verbindung vorgesehen sein.

Die erfindungsgemäße Lösung kann bei sämtlichen, dem Fachmann als geeignet erscheinenden, gattungsbildenden Wischblättern eingesetzt werden, wie beispielsweise bei einem Wischblatt mit einem Wischleistenträger, der zwei durch Bügel verbundene, in Querrichtung beabstandete Federleisten aufweist, zwischen denen eine Wischleiste mit ihrer Kopfleiste eingeschoben ist. Besonders vorteilhaft ist die erfindungsgemäße Lösung jedoch bei einem Wischblatt anwendbar, bei dem die Wischleiste als Hohlprofil mit einem Längskanal ausgebildet und der Wischleistenträger im Längskanal der Wischleiste angeordnet ist. Ohne direkte Kontaktierung zwischen der Adaptereinheit und dem Wischleistenträger und ohne die Wischleiste gefährdende hohe Spannkräfte kann eine vorteilhaft sichere Verbindung zwischen dem Wischleistenträger und der Wischleiste sowie einem Adapterelement der Adaptereinheit erreicht werden.

Ist die Stoffschlussverbindung zwischen dem Wischleistenträger und der Wischleiste von einer Klebeverbindung gebildet, kann bei einer einfachen Montage eine gewünschte Stoffschlussverbindung mit geringem konstruktivem Aufwand erreicht werden, und zwar insbesondere indem bereits bekannte Bauteile verwendet werden können. Neben Klebeverbindungen sind jedoch auch andere, dem Fachmann als sinnvoll erscheinende Stoffschlussverbindungen denkbar, wie beispielsweise eine durch Ultraschallschweißen erzeugte Schweißverbindung oder eine durch Umspritzen hervorgerufene Stoffschlussverbindung usw. Bei einer Wischleiste und einem in einem Längskanal der als Hohlprofil ausgebildeten Wischleiste angeordneten Wischleistenträger ist insbesondere auch denkbar, dass die Wischleiste und der Wischleistenträger außerhalb dem Bereich einer Adaptereinheit über eine Stoffschlussverbindung verbunden sind, wie beispielsweise an deren Enden usw.

Ist der Wischleistenträger innerhalb eines Längskanals der Wischleiste angeordnet, können spezielle Zuführbereiche für einen Klebstoff, wie beispielsweise flächenförmige oder kanalförmige Ausnehmungen, vorgesehen sein, vorteilhaft ist jedoch ein Klebstoff der Stoffschlussverbindung über wenigstens eine Injektion in die Wischleiste eingebracht, wodurch Umgestaltungen der Wischleiste im Hinblick auf die Zuführung von Klebstoff vermieden werden können.

In einem nicht von den Ansprüchen adgedeckte Beispiel wird vorgeschlagen, dass wenigstens ein Adapterelement der Adaptereinheit über eine in Längsrichtung wirkende Formschlussverbindung mit der Wischleiste verbunden ist. Es kann eine einfache und schnelle Montage des Adapterelements und ungewünscht hohe Spannkräfte zur Herstellung einer sicheren Verbindung des Adapterelements mit der Wischleiste können vermieden werden. Das Adapterelement kann dabei aus Kunststoff und/oder aus Metall hergestellt sein. Alternativ oder unterstützend zu einer Formschlussverbindung wäre ferner denkbar, das Adapterelement über eine Klebeverbindung auf der Wischleiste zu fixieren, was sich insbesondere bei einem Adapterelement aus Kunststoff anbieten würde.

Es sind verschiedene, dem Fachmann als sinnvoll erscheinende Formschlussverbindungen denkbar. Eine besonders einfache Formschlussverbindung mit geringem Umgestaltungsaufwand bereits bekannter Bauteile kann jedoch erreicht werden, wenn das Adapterelement wenigstens einen Stift aufweist, der im montierten Zustand in dessen Längserstreckung in die Wischleiste eingeführt ist und die Formschlussverbindung bildet. Der Stift kann dabei in eine bereits vor der Montage vorhandene Ausnehmung der Wischleiste eingeführt sein. Ist der Stift nagelförmig mit einer Spitze ausgeführt, kann dieser jedoch vorteilhaft direkt in die Wischleiste eingesteckt werden, ohne dass an dieser vorab eine entsprechende Ausnehmung vorgesehen werden muss.

Ferner wird vorgeschlagen, dass zumindest ein Adapterelement der Adaptereinheit im montierten Zustand in Längsrichtung über zumindest eine Formschlussverbindung und/oder eine Stoffschlussverbindung mit dem Wischleistenträger verbunden ist. Die Verbindung zwischen der Wischleiste und dem Wischleistenträger kann vorteilhaft durch eine direkte Verbindung zwischen dem Adapterelement und dem Wischleistenträger entlastet werden. Ferner kann vorteilhaft durch die Formschlussverbindung und/oder Stoffschlussverbindung zwischen dem Adapterelement und dem Wischleistenträger einfach eine vorteilhafte Stoffschlussverbindung und/oder Formschlussverbindung zwischen dem Wischleistenträger und der Wischleiste erreicht werden, beispielsweise über einen im montierten Zustand durch die Wischleiste und durch den Wischleistenträger hindurchtretenden Stift des Adapterelements.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt in einer Seitenansicht,
- Fig. 2: das Wischblatt aus Fig. 1 in einer Draufsicht,
- Fig. 3: einen Querschnitt entlang der Linie III-III in Fig. 1 in vergrößerter Darstellung,
- Fig. 4: einen Querschnitt entlang der Linie IV-IV in Fig. 1 in vergrößerter Darstellung,
- Fig. 5: einen Ausschnitt des Wischblatts aus Fig. 1 schräg von oben und
- Fig. 6: einen der Fig. 3 entsprechenden Querschnitt durch ein alternatives Wischblatt.

### Beschreibung der Ausführungsbeispiele

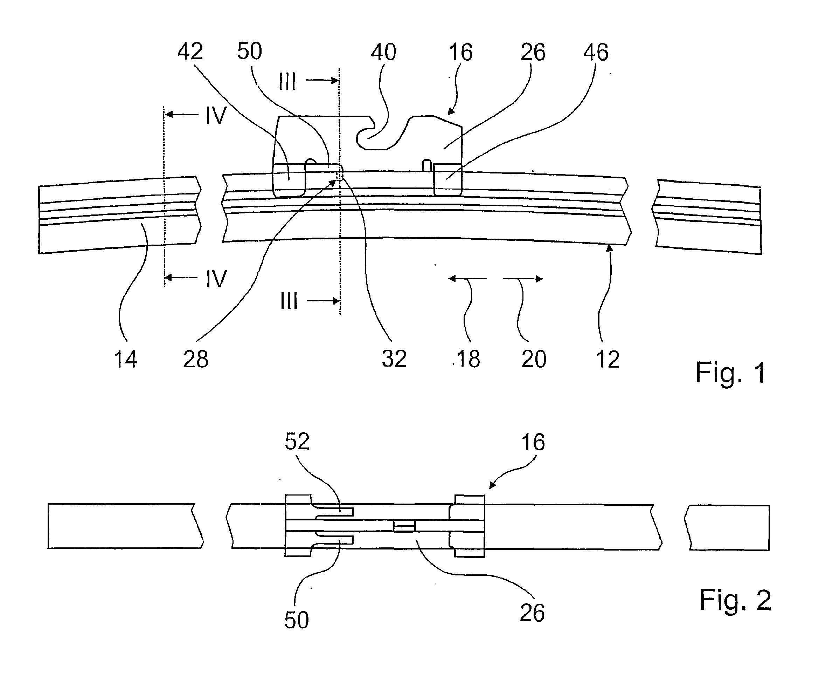

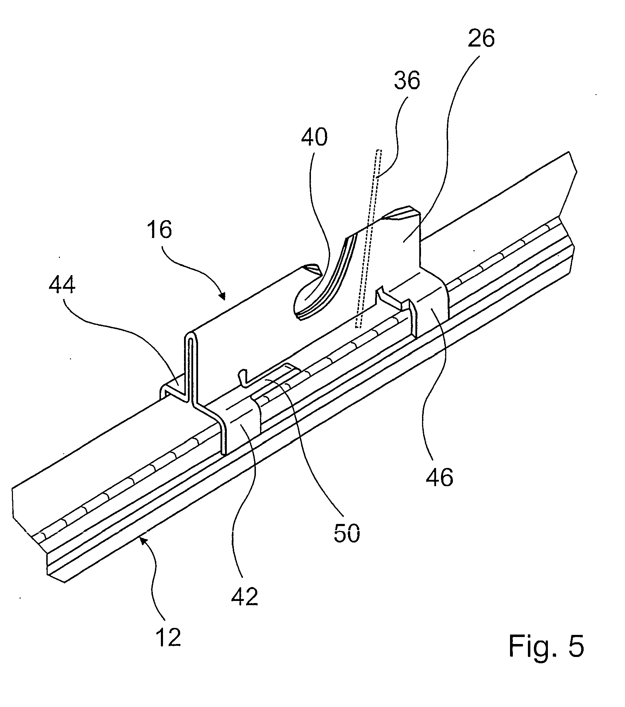

Fig. 1 zeigt ein Wischblatt für ein Kraftfahrzeug in einer Seitenansicht. Das Wischblatt umfasst eine als Hohlprofil ausgebildete Wischleiste 12 mit einem Längskanal 24, in dem ein bogenförmiger, federelastischer Wischleistenträger 10 in Längsrichtung 18 oder 20 eingeschoben ist (Fig. 1 bis 5). Die Wischleiste 12 weist eine Wischlippe 14 auf, die sich entlang einer konkaven Seite des Wischleistenträgers 10 erstreckt. Ferner umfasst das Wischblatt eine von der Wischleiste 12 getrennt ausgebildete Adaptereinheit 16 mit einem in einem Stanz-Biegeprozess hergestellten Adapterelement 26 aus Blech zur Anlenkung an einen nicht näher dargestellten Wischarm.

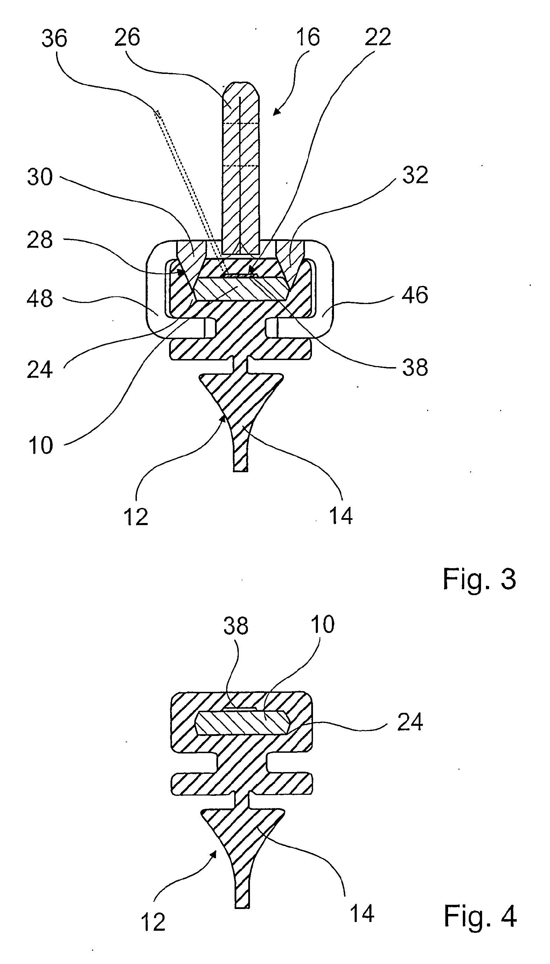

Erfindungsgemäß sind der Wischleistenträger 10 und die Wischleiste 12 im Bereich der Adaptereinheit 16 über eine von einer Klebeverbindung gebildete, in Längsrichtung 18, 20 wirkende Stoffschlussverbindung 22 verbunden. Ein Klebstoff zur Herstellung der Stoffschlussverbindung 22 ist über eine Injektion, und zwar über eine Injektionsnadel 36, wie dies in Fig. 2 und 4 angedeutet ist, in die Wischleiste 12 eingespritzt. Der Klebstoff ist im Bereich der Adaptereinheit 16 zwischen dem Wischleistenträger 10 und der Wischleiste 12 über den Umfang des Wischleistenträgers 10 verteilt und füllt insbesondere im Bereich der Adaptereinheit 16 eine sich in Längsrichtung 18, 20 erstreckende, nutförmige Ausnehmung 38 in einer der Wischlippe 14 abgewandten Seite des Längskanals 24 der Wischleiste 12 aus.

Das Adapterelement 26 weist auf der der Wischlippe 14 abgewandten, infolge des Wischleistenträgers 10 konvex ausgebildeten Seite der Wischleiste 12 einen plattenförmigen, aus zwei Blechwänden zusammengefalteten Teilbereich auf, in den eine Ausnehmung 40 zum Einhängen eines Bolzens des Wischarms eingebracht ist. In Endbereichen des plattenförmigen Teilbereichs sind jeweils zwei krallenartige Klemmmittel 42, 44, 46, 48 angeformt, die eine Kopfleiste der Wischleiste 12 und den darin angeordneten Wischleistenträger 10 untergreifen. Mittels Spannkräften der Klemmmittel 42, 44, 46, 48 wird das Adapterelement 26 auf der Wischleiste 12 in Längsrichtung des Wischblatts kraftschlüssig fixiert.

Ferner sind an die Klemmmittel 42, 44 zwei sich entlang einer Deckseite der Wischleiste 12 in Längsrichtung 18, 20 zur Mitte des Wischblatts erstreckende Stege 50, 52 angeformt, deren Enden zu sich in Richtung der Wischlippe 14 erstreckenden, senkrecht auf der Deckseite stehenden Stifte 30, 32 ausgebildet sind. Die Stifte 30, 32 sind nagelförmig mit einer Spitze ausgebildet, sind in deren Längserstreckung in die Wischleiste 12 eingesteckt und bilden eine in Längsrichtung 18, 20 der Wischleiste 12 wirkende Formschlussverbindung 28 zwischen dem Adapterelement 26 und der Wischleiste 12. Die Spitzen der Stifte 30, 32 ragen bis neben den Wischleistenträger 10 im Längskanal 24 der Wischleiste 12.

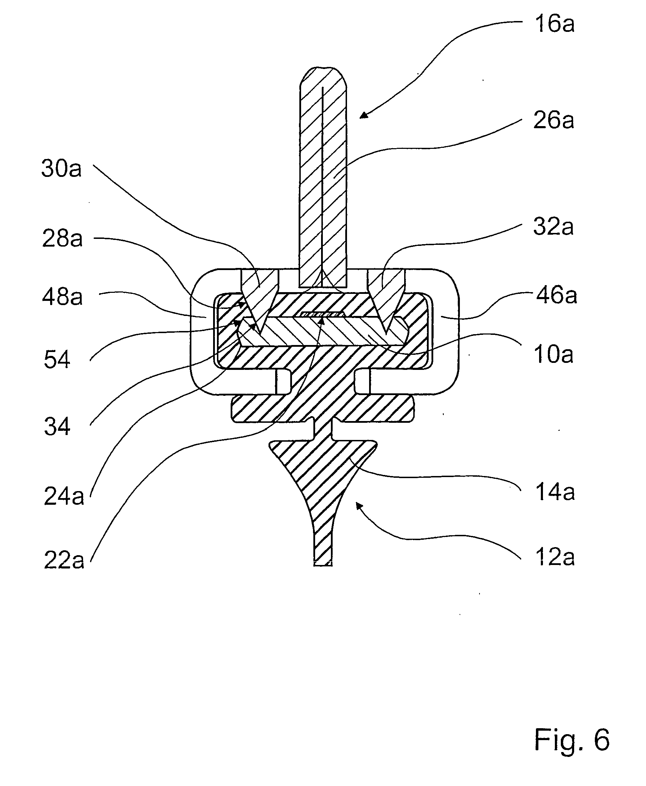

In Fig. 6 ist ein Querschnitt durch ein alternatives Wischblatt dargestellt. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele in Fig. 6 der Buchstabe "a" hinzugefügt ist. Ferner kann bezüglich gleichbleibender Merkmale und Funktionen auf die Beschreibung zum Ausführungsbeispiel in den Fig. 1 bis 5 verwiesen werden. Die nachfolgende Beschreibung beschränkt sich im Wesentlichen auf die Unterschiede zum Ausführungsbeispiel in den Fig. 1 bis 5.

Das Wischblatt weist eine Adaptereinheit 16a mit einem Adapterelement 26a auf, das mit zwei nagelförmigen Stiften 30a, 32a, ausgehend von einer Deckseite einer Wischleiste 12a durch eine Wandung der Wischleiste 12a hindurch in eine vorab in einen Wischleistenträger 10a eingebrachte Ausnehmung geführt ist. Die Stifte 30a, 32a bilden eine Formschlussverbindung 34 zwischen dem Adapterelement 26a und dem Wischleistenträger 10a sowie eine Formschlussverbindung 28a zwischen dem Adapterelement 26a und der Wischleiste 12a sowie eine Formschlussverbindung 54 zwischen dem Wischleistenträger 10a und der Wischleiste 12a.

### Bezugszeichen

- 10: Wischleistenträger
- 12: Wischleiste
- 14: Wischlippe
- 16: Adaptereinheit
- 18: Längsrichtung
- 20: Längsrichtung
- 22: Stoffschlussverbindung
- 24: Längskanal
- 26: Adapterelement
- 28: Formschlussverbindung
- 30: Stift
- 32: Stift
- 34: Formschlussverbindung
- 36: Injektionsnadel
- 38: Ausnehmung
- 40: Ausnehmung
- 42: Klemmmittel
- 44: Klemmmittel
- 46: Klemmmittel
- 48: Klemmmittel
- 50: Steg
- 52: Steg
- 54: Formschlussverbindung

## Patentansprüche

1. Wischblatt, insbesondere für ein Kraftfahrzeug, mit einem federelastischen Wischleistenträger (10, 10a) und einer vom Wischleistenträger (10, 10a) getragenen Wischleiste (12, 12a), deren Wischlippe (14, 14a) sich entlang einer konkaven Seite des Wischleistenträgers (10, 10a) erstreckt, sowie mit einer von der Wischleiste (12, 12a) getrennt ausgebildeten Adaptereinheit (16, 16a) zur Anlenkung an einen Wischarm, die jeweils zwei gegenüberliegend angeordnete krallenartige Klemmmittel (42, 44, 46, 48) aufweist, die eine Kopfleiste der Wischleiste (12) und den darin angeordneten Wischleistenträger (10) untergreifen, wobei die Wischleiste (12, 12a) als Hohlprofil mit einem Längskanal (24, 24a) ausgebildet und der Wischleistenträger (10, 10a) im Längskanal (24, 24a) der Wischleiste (12, 12a) angeordnet ist, **dadurch gekennzeichnet, dass** der Wischleistenträger (10, 10a) und die Wischleiste (12, 12a) im Bereich der Adaptereinheit (16, 16a) über wenigstens eine in Längsrichtung (18, 20) wirkende Stoffschlussverbindung (22, 22a) verbunden sind.

2. Wischblatt nach Anspruch 1, **dadurch gekennzeichnet, dass** die Stoffschlussverbindung (22, 22a) zwischen dem Wischleistenträger (10, 10a) und der Wischleiste (12, 12a) von einer Klebeverbindung gebildet ist.

3. Wischblatt nach Anspruch 2, **dadurch gekennzeichnet, dass** ein Klebstoff der Stoffschlussverbindung (22, 22a) über wenigstens eine Injektion in die Wischleiste (12,12a) eingebracht ist.

## Claims

1. Wiper blade, in particular for a motor vehicle, with a spring-elastic wiper strip carrier (10, 10a) and with a wiper strip (12, 12a) which is carried by the wiper strip carrier (10, 10a) and the wiper lip (14, 14a) of which extends along a concave side of the wiper strip carrier (10, 10a), and with an adaptor unit (16, 16a), which is formed separately from the wiper strip (12, 12a), for coupling to a wiper arm which in each case has two claw-like clamping means (42, 44, 46, 48) which are arranged opposite each other and engage below a head strip of the wiper strip (12) and the wiper strip carrier (10) arranged therein, wherein the wiper strip (12, 12a) is designed as a hollow profile with a longitudinal channel (24, 24a), and the wiper strip carrier (10, 10a) is arranged in the longitudinal channel (24, 24a) of the wiper strip (12, 12a), **characterized in that** the wiper strip carrier (10, 10a) and the wiper strip (12, 12a) are connected in the region of the adaptor unit (16, 16a) via at least one cohesive material connection (22, 22a) acting in the longitudinal direction (18, 20).

2. Wiper blade according to Claim 1, **characterized in that** the cohesive material connection (22, 22a) between the wiper strip carrier (10, 10a) and the wiper strip (12, 12a) is formed by an adhesive connection.

3. Wiper blade according to Claim 2, **characterized in that** an adhesive of the cohesive material connection (22, 22a) is introduced into the wiper strip (12, 12a) via at least one injection.

## Revendications

1. Balai d'essuie-glace, en particulier pour un véhicule automobile, comprenant un support de raclette de balai d'essuie-glace (10, 10a) élastique à ressort et une raclette de balai d'essuie-glace (12, 12a) portée par le support de raclette de balai d'essuie-glace (10, 10a), dont la lèvre de balai d'essuie-glace (14, 14a) s'étend le long d'un côté concave du support de raclette de balai d'essuie-glace (10, 10a), ainsi qu'une unité d'adaptateur (16, 16a) réalisée de manière séparée de la raclette de balai d'essuie-glace (12, 12a) en vue de l'articulation à un bras d'essuie-glace, laquelle présente à chaque fois deux moyens de serrage de type griffes (42, 44, 46, 48) disposés en regard, qui viennent en prise par le bas avec une raclette de tête de la raclette de balai d'essuie-glace (12) et avec le support de raclette de balai d'essuie-glace (10) disposé dedans, la raclette de balai d'essuie-glace (12, 12a) étant réalisée sous forme de profilé creux avec un canal longitudinal (24, 24a) et le support de raclette de balai d'essuie-glace (10, 10a) étant disposé dans le canal longitudinal (24, 24a) de la raclette de balai d'essuie-glace (12, 12a), **caractérisé en ce que** le support de raclette de balai d'essuie-glace (10, 10a) et la raclette de balai d'essuie-glace (12, 12a) sont raccordés dans la région de l'unité d'adaptateur (16, 16a) par le biais d'au moins une connexion par engagement par liaison de matière (22, 22a) agissant dans la direction longitudinale (18, 20).

2. Balai d'essuie-glace selon la revendication 1, **caractérisé en ce que** la connexion par engagement par liaison de matière (22, 22a) est formée par une connexion par collage entre le support de raclette de balai d'essuie-glace (10, 10a) et la raclette de balai d'essuie-glace (12, 12a).

3. Balai d'essuie-glace selon la revendication 2, **caractérisé en ce qu'**un adhésif de la connexion par engagement par liaison de matière (22, 22a) est introduit par le biais d'au moins une injection dans la raclette de balai d'essuie-glace (12, 12a).
